# FASCICULE DE BREVET EUROPEEN

(11) **EP 0 691 393 B1**
(45) Date de publication et mention de la délivrance du brevet: **20.09.2000**
(21) Numéro de dépôt: 95401576.4
(22) Date de dépôt: 30.06.1995
(51) Int. Cl.: C10L 3/00, B01D 53/26, B01D 15/00

(54) **Procédé de séchage d'un mélange gazeux ou liquide à l'aide d'un adsorbeur composé d'alumine et d'un tamis moléculaire**
Verfahren zum Trocknen einer Gas- und Flüssigkeitsmischung mittels eines aus Aluminiumoxid und Molekularsieb bestehenden Absorbers
Process for drying a gaseous or liquid mixture by an adsorber composed of alumina and molecular sieve

(30) Priorité: 06.07.1994 FR 9408332
(43) Date de publication de la demande: 10.01.1996
(73) Titulaire: INSTITUT FRANCAIS DU PETROLE, 92852 Rueil-Malmaison Cedex (FR)
(72) Inventeur: Jochem, Gérard, F-78600 Le Mesnil Le Roi (FR)

(56) Documents cités:
- EP-A- 0 160 180
- EP-A- 0 360 752
- US-A- 3 078 640
- US-A- 3 691 251
- US-A- 4 374 654
- US-A- 4 639 259
- US-A- 5 191 149
- DATABASE WPI Week 7907 Derwent Publications Ltd., London, GB; AN 79-12604B & JP-A-54 000 459 (NICHIE)

## Description

Les procédés d'élimination de l'eau de gaz industriels ou d'un mélange d'hydrocarbures gazeux ou liquides par passage de ces derniers à travers des adsorbants sont connus.

Les tamis moléculaires sont particulièrement utilisés pour de tels procédés. Cependant, les tamis moléculaires se détériorent rapidement en raison de la présence d'eau dite insoluble, c'est-à-dire liquide, dans les gaz ou liquides à sécher. En effet, celle-ci conduit à une perte de rendement en élimination de l'eau et à un vieillissement accéléré des tamis.

Pour éviter cela, il est connu de protéger les tamis moléculaires par une couche d'alumine, de gel de silice ou de charbon actif qui a pour rôle d'adsorber l'eau liquide. Les combinaisons des couches d'alumine et des tamis moléculaires permettent de prolonger la durée de vie du tamis et d'assurer un bon séchage des gaz ou liquides.

Toutefois, le besoin se fait encore sentir d'une augmentation de la durée de vie de ces tamis moléculaires et de leur efficacité en adsorption.

Le but de l'invention est de proposer un procédé d'élimination de l'eau de gaz industriels ou d'un mélange d'hydrocarbures gazeux ou liquides à l'aide d'un adsorbant composé de la combinaison de couches de tamis moléculaires et d'alumine afin d'obtenir un rendement d'élimination de l'eau satisfaisant tout en réduisant de manière considérable le vieillissement de l'adsorbant.

L'objet de l'invention est de proposer un procédé de séchage d'un mélange gazeux ou liquide par passage dudit mélange dans un adsorbeur caractérisé en ce que la zone d'équilibre d'adsorption de l'eau de l'adsorbeur comporte une zone amont d'alumine et une zone aval de tamis moléculaire.

D'autres caractéristiques de l'invention apparaîtront à la lecture de la description et des exemples non limitatifs.

L'invention concerne tout d'abord un procédé de séchage d'un mélange gazeux ou liquide par passage dudit mélange dans un adsorbeur caractérisé en ce que la zone d'équilibre d'adsorption de l'eau de l'adsorbeur comporte une zone amont d'alumine et une zone aval de tamis moléculaire.

Plus précisément, ce procédé a trait à l'élimination de mélanges gazeux ou liquides. La composition de ce mélange peut être très variée. On peut citer notamment les gaz industriels ou les mélanges d'hydrocarbures gazeux ou liquides. Les gaz à sécher peuvent être par exemple les gaz naturels type méthane, éthane,... ou des gaz associés, obtenus lors de la séparation liquide/gaz des fractions pétrolières, les gaz issus du vapocraquage ou du fluid cracking catalytique (FCC), les gaz industriels tels que les gaz purs : N₂, O₂, Ar,..., les gaz de cokerie ou les gaz issus des procédés tels que le reforming catalytique, l'hydrocracking... Les liquides à sécher peuvent être des condensats de gaz naturels type CO₂, air liquide ou des GPL (gaz pétrole liquide) tels que le propane, le butane par exemple.

Ces mélanges peuvent être insaturés, saturés ou sursaturés en eau.

Le procédé met en oeuvre le principe de séparation de l'eau de gaz ou liquides la contenant par adsorption de celle-ci sur des couches d'alumines et de tamis moléculaires. Le procédé consiste à introduire les gaz ou liquides à sécher dans un adsorbeur où ils vont rencontrer successivement une couche d'alumine et une couche de tamis moléculaire. L'introduction des gaz ou liquides peut aussi bien se faire par le haut que par le bas de l'adsorbeur du moment que les gaz ou liquides passent d'abord dans la couche d'alumine puis ensuite seulement dans la couche de tamis moléculaire.

Dans la mise en oeuvre du procédé, l'alumine adsorbe l'eau sous forme gazeuse mais aussi essentiellement l'eau sous forme liquide, tandis que le tamis moléculaire n'adsorbe plus que l'eau gazeuse.

Dans le procédé selon l'invention, il est essentiel que l'alumine et le tamis moléculaire soient introduits dans des conditions précises. Il faut d'une part que l'alumine ne soit pas située dans la zone de transfert de masse d'adsorption de l'eau de l'adsorbeur.

La notion de zone de transfert de masse, ici utilisée, correspond à la notion classique de zone de transfert de masse dans le domaine technique des adsorptions sur lits, c'est-à-dire qu'elle se définit comme la portion de l'adsorbeur dans laquelle la concentration de l'adsorbat, ici l'eau, sur l'adsorbant varie de la concentration nulle à la concentration d'absorption maximale à l'équilibre. Cette zone de transfert de masse est généralement de longueur constante et se déplace au cours du cycle d'adsorption depuis l'entrée de l'adsorbeur jusqu'à sa sortie (dans le sens d'introduction des gaz ou liquides).

Trés précisément, la zone de transfert de masse se définit, dans cette invention, comme la zone de transfert de masse prise au moment où l'eau perce en sortie de l'adsorbeur, c'est-à-dire au moment où la capacité d'adsorption de l'adsorbant est saturée et le cycle terminé.

D'autre part, il faut que l'alumine soit placée dans la zone dite amont de la zone d'équilibre d'adsorption de l'eau de l'adsorbeur et le tamis moléculaire dans la zone dite aval de ladite zone d'équilibre de l'adsorbeur.

La zone amont, comportant de l'alumine, correspond à la partie de la zone d'équilibre qui est la première en contact avec les gaz ou liquides à sécher, et la zone aval, comportant du tamis moléculaire, correspond à la partie de la zone d'équilibre qui est la dernière en contact avec le mélange gazeux ou liquide à sécher.

La zone d'équilibre correspond, elle aussi, à la notion classique de zone d'équilibre dans le domaine technique des adsorptions sur lits. Elle se définit donc comme la portion de l'adsorbeur dans laquelle la concentration de l'adsorbat, ici l'eau, sur un même adsorbant est constante. La longueur de cette zone d'équilibre augmente au cours du cycle d'adsorption.

Dans le cadre de l'invention, la zone d'équilibre se définit aussi comme la zone d'équilibre prise au moment où l'eau perce en sortie de l'adsorbeur, c'est-à-dire au moment où la capacité d'adsorption de l'adsorbant est saturée et le cycle terminé, et donc au même moment où la zone de transfert de masse est définie.

D'une manière pratique la zone de transfert de masse se définit à partir des isothermes d'adsorption des adsorbants utilisés pour une pression et une température fixées et des coefficients de diffusion interne et externe des adsorbats dans les adsorbants; la zone d'équilibre se détermine à partir des isothermes d'adsorption des adsorbants utilisés à température et pression fixées.

Généralement, dans la zone d'équilibre de l'adsorbeur, le rapport du volume de l'alumine sur celui de l'alumine et du tamis moléculaire (Q) est au plus de 0,95.

Dans ce cas et pour toute la description, les volumes d'alumine et de tamis moléculaire correspondent aux volumes déterminés au moment du chargement de l'adsorbeur.

D'une manière préférentielle, dans la zone d'équilibre de l'adsorbeur, le rapport du volume de l'alumine sur celui de l'alumine et du tamis moléculaire (Q) est compris entre 0,05 et 0,95, de manière encore plus préférentielle, ce rapport est compris entre 0,05 et 0,8, et plus préférentiellement entre 0,2 et 0,8, en fonction des modes de réalisation.

Dans le cas où le mélange gazeux ou liquide est sursaturé ou saturé en eau et selon un premier mode de réalisation, le rapport du volume de l'alumine sur celui de l'alumine et du tamis moléculaire dans la zone d'équilibre d'adsorption de l'eau (Q) est de préférence compris entre 0,5 et 0,8. Un tel rapport de volumes permettra d'éliminer efficacement l'eau. On considère qu'un mélange gazeux est sursaturé en eau lorsqu'il contient, à une température et une pression données, de l'eau en phase gazeuse et en phase liquide ; et qu'un mélange liquide est sursaturé en eau lorsqu'il contient de l'eau miscible et de l'eau non miscible aux constituants du liquide.

Selon un second mode de réalisation qui correspond au cas où le mélange gazeux ou liquide est sous-saturé ou saturé en eau, le rapport du volume de l'alumine sur celui de l'alumine et du tamis moléculaire dans la zone d'équilibre d'adsorption de l'eau (Q) est compris de préférence entre 0,05 et 0,30. Un mélange gazeux est sous-saturé en eau à une température et une pression données lorsqu'il contient une quantité d'eau gazeuse inférieure à celle correspondant à la saturation, ladite saturation correspondant à la solubilité maximale de l'eau dans le mélange gazeux à une température et une pression données. Un mélange liquide est sous-saturé en eau à une température donnée lorqu'il contient une quantité d'eau miscible inférieure à celle de la saturation, la saturation correspondant à la solubilité maximale de l'eau dans le mélange liquide à une température donnée.

Les alumines utilisées dans le procédé selon l'invention sont en général issues de la déshydratation rapide d'au moins un hydroxyde d'aluminium tel que la bayerite, l'hydrargillite ou gibbsite, la nordstrandite et/ou d'au moins un oxyhydroxyde d'aluminium tel que la boehmite, la pseudoboehmite et la diaspore. Elles peuvent être issues en particulier du procédé décrit dans le brevet FR 1 108 011. On peut aussi utiliser des gels d'alumine.

Les alumines spéciales Sphéralite® 501 A et C, 505A et CR commercialisées par Procatalyse conviennent à ce type de procédé.

Il est possible d'utiliser tous types de tamis moléculaires adaptés au séchage des mélanges gazeux ou liquides. Ces tamis peuvent comprendre en particulier des zéolites. On mettra en oeuvre préférentiellement les zéolites choisies parmi le groupe comprenant les zéolites A et X. De manière encore plus préférentielle, on utilisera des tamis moléculaires composés de zéolite mise en forme à l'aide d'un liant qui peut être une argile (kaolinite, bentonite, montmorillonite, attalpulgite..), une alumine ( gel d'alumine ou alumine issue de la déshydratation rapide d'hydroxydes ou d'oxyhydroxydes d'aluminium), un mélange de silice et d'alumine amorphe, un gel de silice, ou encore de l'oxyde de titane.

La nature de la couche de tamis moléculaire et la taille des tamis moléculaires dans la zone de transfert de masse et dans la zone d'équilibre peuvent être différentes. Par exemple, si le tamis se présente sous forme d'extrudés, leurs diamétres peuvent varier selon qu'ils sont dans la zone de transfert de masse ou dans la zone d'équilibre d'adsorption de l'eau.

Le procédé nécessite la mise en oeuvre d'au moins un adsorbeur chargé dans les proportions et par les produits définis ci-dessus. L'unité mettant en oeuvre le procédé peut être constituée de plusieurs adsorbeurs fonctionnant en série ou en parallèle, certains fonctionnant en mode d'adsorption tandis que les autres fonctionnent en mode de régénération.

L'invention concerne également un procédé de séchage d'un mélange liquide ou gazeux tel que défini précédemment dans lequel le mélange comprend en outre de l'HCl et caractérisé en ce que la zone d'adsorption de l'eau de l'adsorbeur est précédée, dans le sens de passage du mélange dans l'adsorbeur, d'une zone à base d'alumine permettant d'éliminer l'HCl contenu dans le mélange.

Le procédé de séchage selon l'invention peut donc être combiné d'une manière plus générale à des procédés d'élimination de composés différents de l'eau, tels que par exemple HCI. Dans ce cas, on introduit le mélange gazeux ou liquide duquel on souhaite éliminer l'eau et l'HCl dans un adsorbeur comprenant une première zone d'adsorption de HCI à base d'alumine et une deuxième zone d'adsorption de l'eau qui met en oeuvre le procédé selon l'invention c'est-à-dire une zone d'adsorption de l'eau dont la zone d'équilibre comporte une zone amont d'alumine et une zone aval de tamis moléculaire.

La première zone d'adsorption de l'HCI est constituée en général d'une alumine du même type que celles citées précédemment et préférablement dopées par un alcalino-terreux.

L'invention concerne aussi un procédé de séchage d'un mélange liquide ou gazeux tel que défini précédemment dans lequel le mélange comprend en outre de l'H₂S et caractérisé en ce que la zone d'adsorption de l'eau de l'adsorbeur est suivie, dans le sens de passage du mélange dans l'adsorbeur, d'une zone à base de tamis moléculaire permettant d'éliminer l'H₂S contenu dans le mélange.

Dans ce cas, on introduit le mélange gazeux ou liquide duquel on souhaite éliminer l'eau et l'H₂S dans un adsorbeur comprenant une première zone d'adsorption de l'eau qui met en oeuvre le procédé selon l'invention c'est-à-dire une zone d'adsorption de l'eau dont la zone d'équilibre comporte une zone amont d'alumine et une zone aval de tamis moléculaire, et une deuxième zone d'adsorption de H₂S à base de tamis moléculaire.

La deuxième zone d'adsorption de l'H₂S est en général à base de tamis moléculaires du type de ceux cités précédemment, il s'agit préférablement de tamis moléculaires type 5A.

Enfin, l'invention concerne un procédé de séchage d'un mélange liquide ou gazeux tel que défini précédemment dans lequel le mélange comprend en outre de l'HCI et de l'H₂S et caractérisé en ce que la zone d'adsorption de l'eau de l'adsorbeur est précédée, dans le sens de passage du mélange dans l'adsorbeur, d'une zone à base d'alumine permettant d'éliminer l'HCI contenu dans le mélange, et suivie d'une zone à base de tamis moléculaire permettant d'éliminer l'H₂S contenu dans le mélange.

A titre d'exemples, on donne ci-dessous quelques éléments sur les conditions de marche des adsorbeurs, étant entendu que l'homme du métier adaptera si nécessaire ces conditions en fonction du type de mélange gazeux ou liquide traité.

La vitesse superficielle du mélange gazeux dans l'adsorbeur est comprise entre 1 et 20 m/min et celle du mélange liquide entre 0,1 et 2 m/min.

La pression au sein de l'adsorbeur est comprise entre 0,8 bar (600 mm Hg) et 150 bar.

La température au sein de l'adsorbeur est comprise entre - 40 et 100°C.

Lorsque l'adsorption est terminée, l'adsorbeur est régénéré par introduction d'un fluide en élevant la température et/ou par réduction de la pression partielle. La température peut être comprise entre 0 et 350°C, la pression de régénération (PG) entre 1 et 120 bar. En cas de réduction de la pression partielle, la dépressurisation est au maximum de 4 bar/min.

Les exemples suivants illustrent l'invention, sans en limiter, toutefois, sa portée.

### EXEMPLES 1 à 14

Dans tous les exemples 1 à 14, le gaz traité est du gaz naturel dont la composition en volume est la suivante:

| | |
|---|---|
| Azote | 1,3% |
| CO₂ | 3,0% |
| Méthane | 75,3% |
| Ethane | 11,6% |
| Propane | 4,6% |
| Isobutane | 1,2% |
| N butane | 1,4% |
| Isopentane | 0,4% |
| N pentane | 0,4% |
| N hexane | 0,1% |
| N heptane | 0,1 % |
| | |
| H₂S | 10 ppm en volume |

, sa teneur en eau variant de 1000 ppm à 1450 ppm en volume.

Dans tous les exemples, les conditions opératoires d'adsorption sont les suivantes:

| | |
|---|---|
| Pression | 46,0 bars |
| Température | 30°C |
| Temps d'adsorption | 24 heures |
| Débit par sécheur | 30 m³/h [Nm³/h] |
| Sens du flux | de bas en haut |

Et les conditions opératoires de régénération sont les suivantes :

| | |
|---|---|
| Type de gaz | gaz naturel sec |
| Pression de régénération | 40 ou 15 bars |
| Sens du flux | de haut en bas |
| Température | 260°C |
| Temps de chauffage | 4 h |
| Temps de refroidissement | 4 h |
| Débit en gaz | 4 M³/h [Nm³/h] |

L'unité est constituée de trois adsorbeurs fonctionnant en parallèle dont deux adsorbent lorsque le troisième désorbe.

Le fluide circulant de bas en haut, on trouve dans le bas de la colonne la zone d'équilibre formée dans sa couche inférieure ou zone amont d'une couche d'alumine et dans sa couche supérieure ou zone aval d'une couche de tamis moléculaire, et on trouve, au dessus de la zone d'équilibre d'adsorption de l'eau, la zone de transfert de masse d'adsorption de l'eau formée uniquement du tamis moléculaire.

Les adsorbeurs sont des colonnes de diamètre interne 70 mm. L'alumine utilisée dans la zone d'équilibre est l'alumine Sphéralite® 501A, commercialisée par Procatalyse, il s'agit d'une alumine activée se présentant sous la forme de billes de 2 à 5 mm de diamètre. Le tamis moléculaire utilisé dans la zone d'équilibre est une zéolite sous forme d'extrudés de diamètre 3,2 mm et celui de la zone de transfert de masse une zéolite sous forme d'extrudés de diamètre 1,6 mm. Il s'agit dans les deux cas de tamis moléculaire 4ANG commercialisé par Procatalyse.

### - Exemples 1 à 4

Le gaz naturel à traiter est en sous-saturation en eau et comprend 1000 ppm d'eau en volume.

On met en parallèle les facteurs de vieillissement (F) de deux unités fonctionnant selon le procédé de l'invention, l'une avec un rapport du volume d'alumine sur le volume d'alumine et du tamis moléculaire, dans la zone d'équilibre d'adsorption de l'eau, Q de 0,107, l'autre de 0,152, avec les facteurs de vieillissement d'une unité constituée uniquement, dans sa zone d'équilibre d'adsorption de l'eau, de tamis moléculaire (Q = 0) et d'une unité constituée uniquement, dans sa zone d'équilibre d'adsorption de l'eau, d'alumine (Q = 1).

Le facteur de vieillissement est le rapport de la capacité réelle d'adsorption de l'eau du système d'adsorbant au bout de x régénérations sur la capacité réelle d'adsorption de l'eau du système d'adsorbant neuf, c'est-à-dire au bout d'une régénération.

Plus précisément, les adsorbeurs selon l'invention ont la composition suivante:

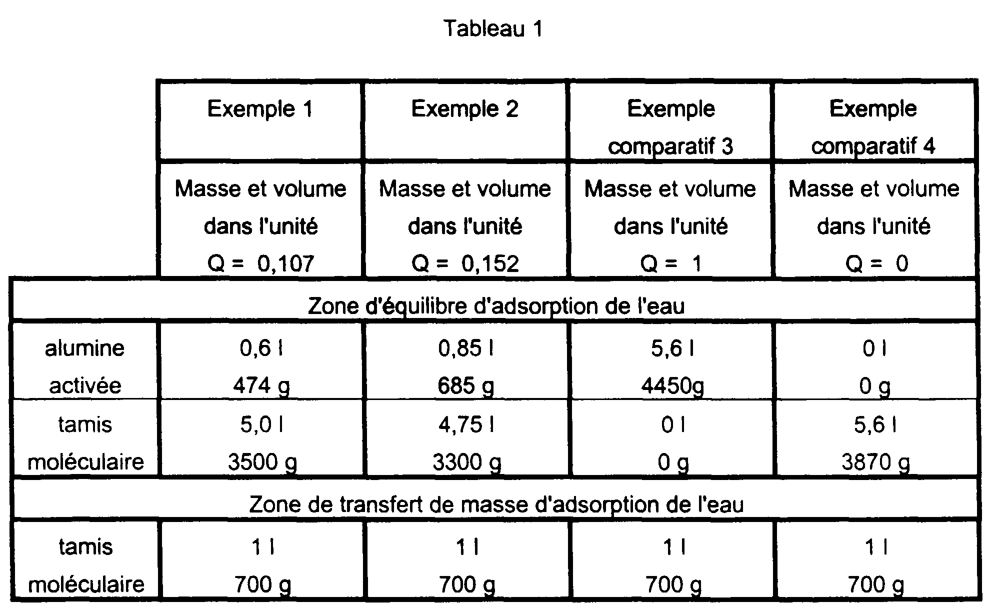

En fonction du nombre de régénérations des adsorbeurs, on mesure les facteurs de vieillissement (F) des unités de rapport Q = 0,107 et 0,152 fonctionnant sous une pression de régénération (PG) de 40 bar et on les compare aux facteurs de vieillissement (F) des unités de rapport Q = 0 et 1 fonctionnant sous une pression de régénération (PG) de 40 bar.
On a mesuré des facteurs identiques pour les unités de rapport Q = 0,107 et 0,152. On obtient les résultats suivants :

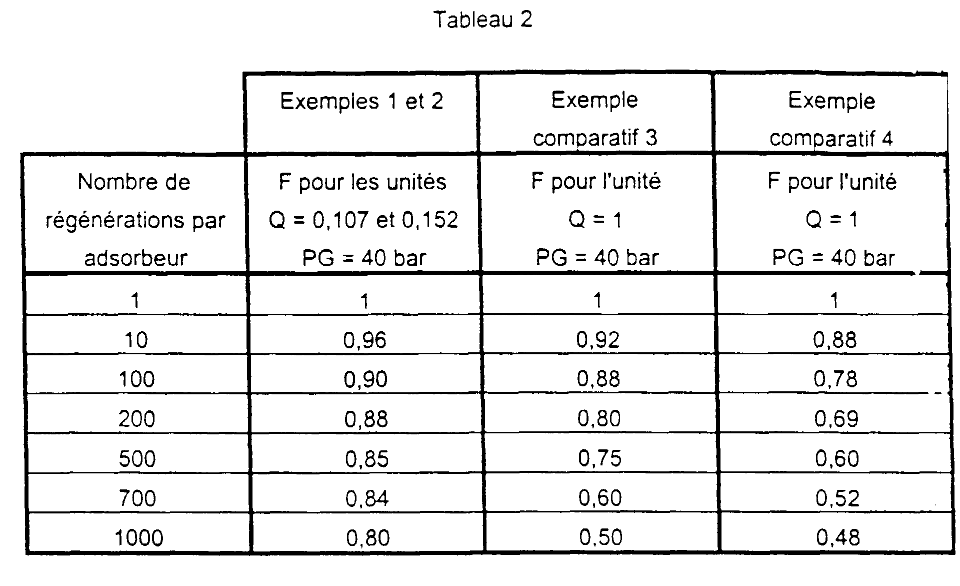

Les concentrations en eau des gaz en sortie des adsorbeurs de Q = 0,107 et 0,152 et de celles des adsorbeurs de Q = 0 et 1 sont équivalentes et inférieures à 0,1 ppm en volume.

### - Exemples 5 à 7

Le gaz naturel à traiter comprend 1150 ppm d'eau en volume.

On met en parallèle les facteurs de vieillissement de deux unités fonctionnant selon le procédé de l'invention, l'une avec un rapport du volume d'alumine sur le volume d'alumine et du tamis moléculaire dans la zone d'équilibre d'adsorption de l'eau Q de 0,141, l'autre de 0,25, avec les facteurs de vieillissement d'une unité constituée, dans sa zone d'équilibre d'adsorption de l'eau, uniquement de tamis moléculaire donc de rapport Q = 0.

Plus précisément, les adsorbeurs selon l'invention ont la composition suivante :

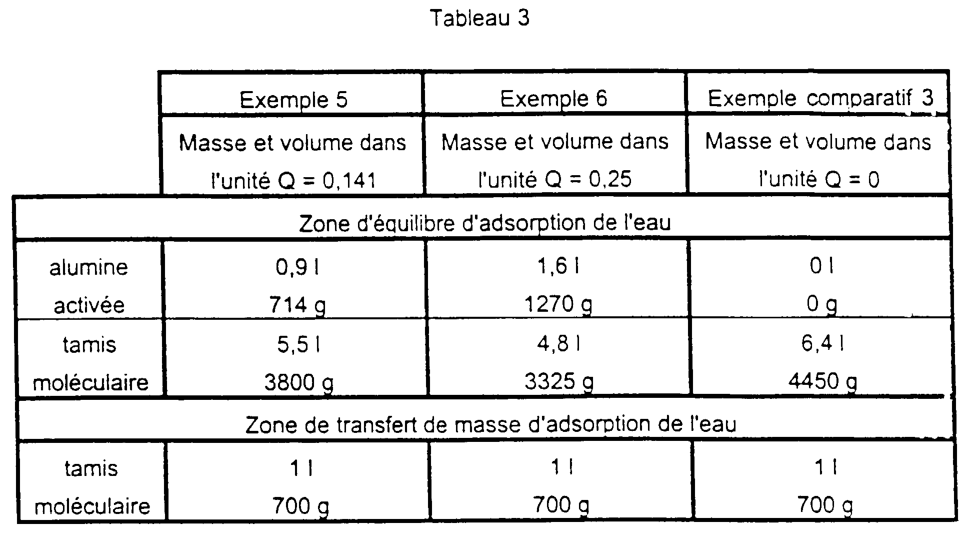

En fonction du nombre de régénérations des adsorbeurs, on mesure les facteurs de vieillissement (F) des unités de rapport Q = 0,142 et 0,25 fonctionnant sous une pression de régénération (PG) de 40 bar et on les compare aux facteurs de vieillissement (F) de l'unité de rapport Q = 0 fonctionnant sous une pression de régénération (PG) de 40 bar ou de 15 bar.

On a mesuré des facteurs identiques pour les unités de rapport Q = 0,142 et 0,25.

On obtient les résultats suivants :

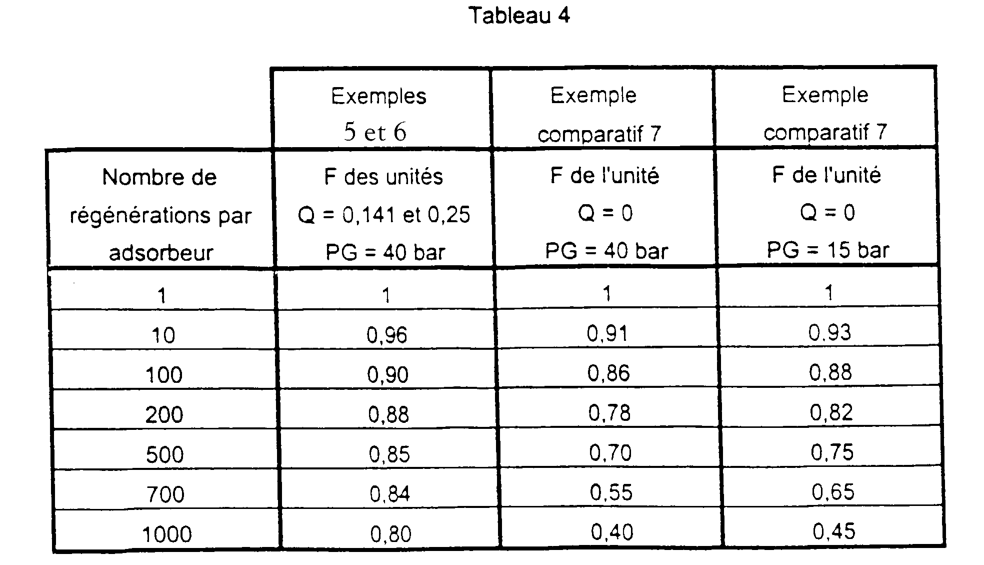

On constate que le vieillissement des adsorbeurs de rapport Q = 0,142 et 0,25 est moins accentué que celui de l'adsorbeur de rapport Q = 0, même si ce dernier est régénéré sous une PG de 15 bar qui limite le vieillissement de l'adsorbeur par rapport à un fonctionnement à PG = 40 bar.

Les concentrations en eau des gaz en sortie des adsorbeurs de Q = 0,141 et 0,25 et de celles de l'adsorbeur de Q = 0 sont équivalentes et inférieures à 0,1ppm en volume.

### - Exemples 8 à 10

Le gaz naturel à traiter comprend 1260 ppm d'eau en volume.

On met en parallèle les facteurs de vieillissement de deux unités fonctionnant selon le procédé de l'invention, l'une avec un rapport du volume d'alumine sur le volume d'alumine et du tamis moléculaire dans la zone d'équilibre d'adsorption de l'eau (Q) de 0,292, l'autre de 0,5, avec les facteurs de vieillissement d'une unité constituée, dans sa zone d'équilibre d'adsorption de l'eau, uniquement de tamis moléculaire donc de rapport Q = 0.

Plus précisément, les adsorbeurs selon l'invention ont la composition suivante :

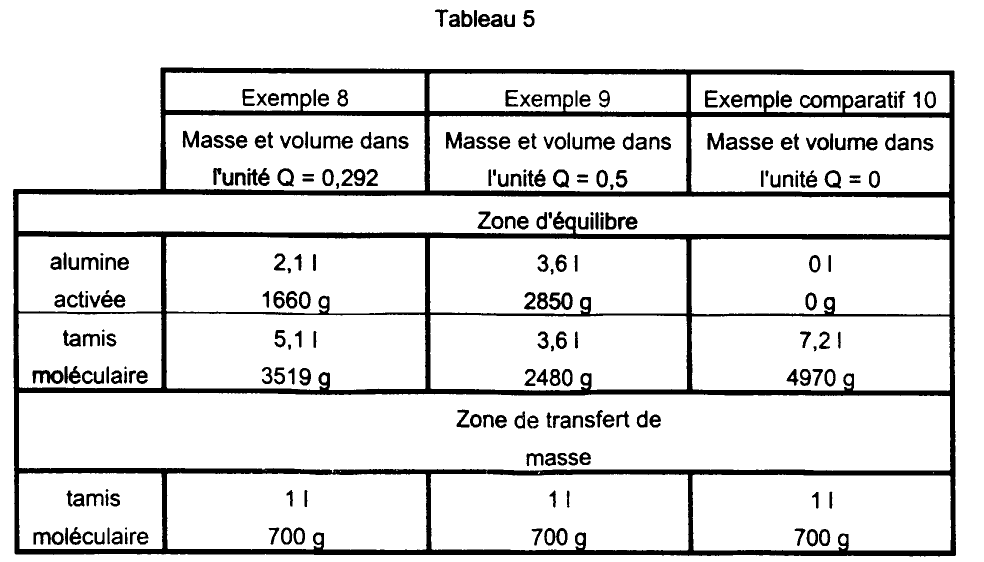

En fonction du nombre de régénérations des adsorbeurs, on mesure les facteurs de vieillissement (F) des unités de rapport Q = 0,296 et 0,5 fonctionnant sous une pression de régénération (PG) de 40 bar et on les compare aux facteurs de vieillissement (F) de l'unité de rapport Q = 0 fonctionnant sous une pression de régénération (PG) de 40 bar ou de 15 bar.

On a mesuré des facteurs identiques pour les unités de rapport Q = 0,292 et 0,5.

On obtient les résultats suivants :

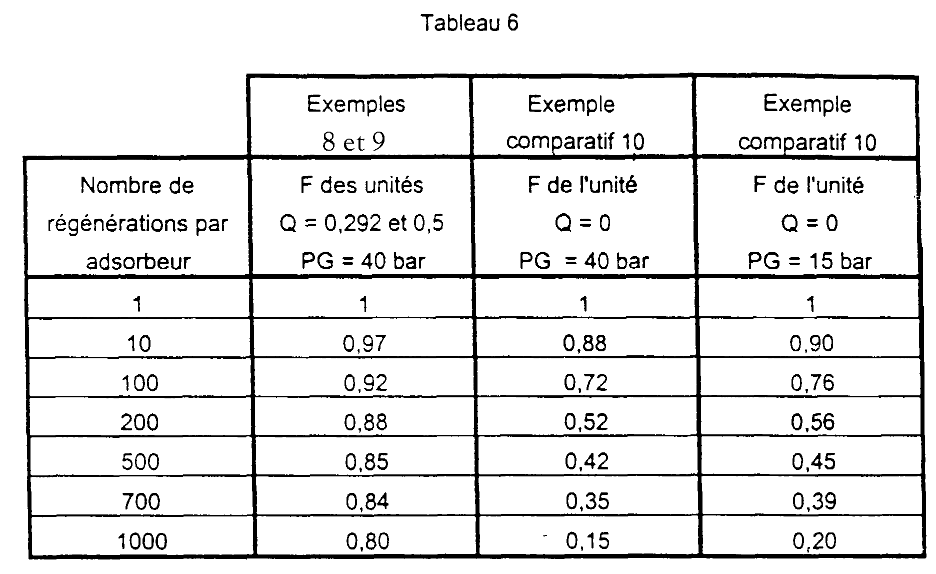

On constate que le vieillissement des adsorbeurs de rapport Q = 0,296 et 0,5 est moins accentué que celui de l'adsorbeur de rapport Q = 0, même si ce dernier est régénéré sous une PG de 15 bar qui limite le vieillissement de l'adsorbeur par rapport à un fonctionnement à PG = 40 bar.

Les concentrations en eau des gaz en sortie des adsorbeurs de Q = 0,296 et 0,5 et de celles de l'adsorbeur de Q = 0 sont équivalentes et inférieures à 0,1ppm en volume.

### - Exemples 11 à 14

Le gaz naturel à traiter est en sursaturation et comprend 1450 ppm d'eau en volume.

On met en parallèle les facteurs de vieillissement de deux unités fonctionnant selon le procédé de l'invention, l'une avec un rapport du volume d'alumine sur le volume d'alumine et du tamis moléculaire dans la zone d'équilibre de 0,5, l'autre de 0,8, avec les facteurs de vieillissement d'une unité constituée, dans sa zone d'équilibre d'adsorption de l'eau, uniquement de tamis moléculaire donc de rapport Q = 0 et d'une unité constituée, dans sa zone d'équilibre d'adsorption de l'eau, uniquement d'alumine donc de rapport Q = 1.

Plus précisément, les adsorbeurs selon l'invention ont la composition suivante :

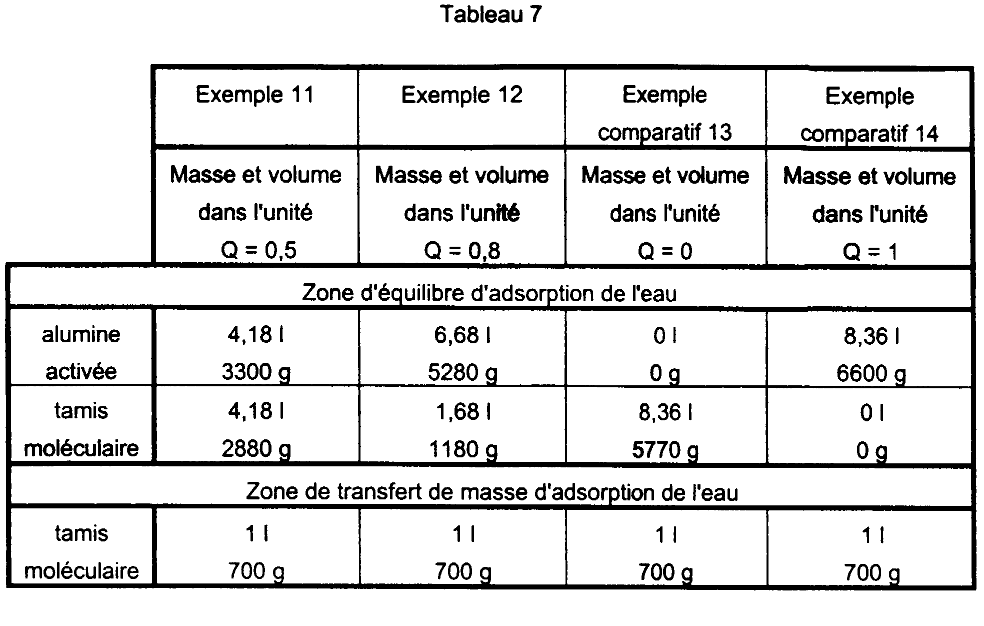

En fonction du nombre de régénérations des adsorbeurs, on mesure les facteurs de vieillissement (F) des unités de rapport Q = 0,5 et 0,8 fonctionnant sous une pression de régénération (PG) de 40 bar et on les compare aux facteurs de vieillissement (F) de l'unité de rapport Q = 1 fonctionnant sous une pression de régénération (PG) de 40 bar et aux facteurs de vieillissement (F) de l'unité de rapport Q = 0 fonctionnant sous une pression de régénération (PG) de 40 bar ou 15 bar.

On mesure des facteurs identiques pour les unités de rapport Q = 0,5 et 0,8

On obtient les résultats suivants :

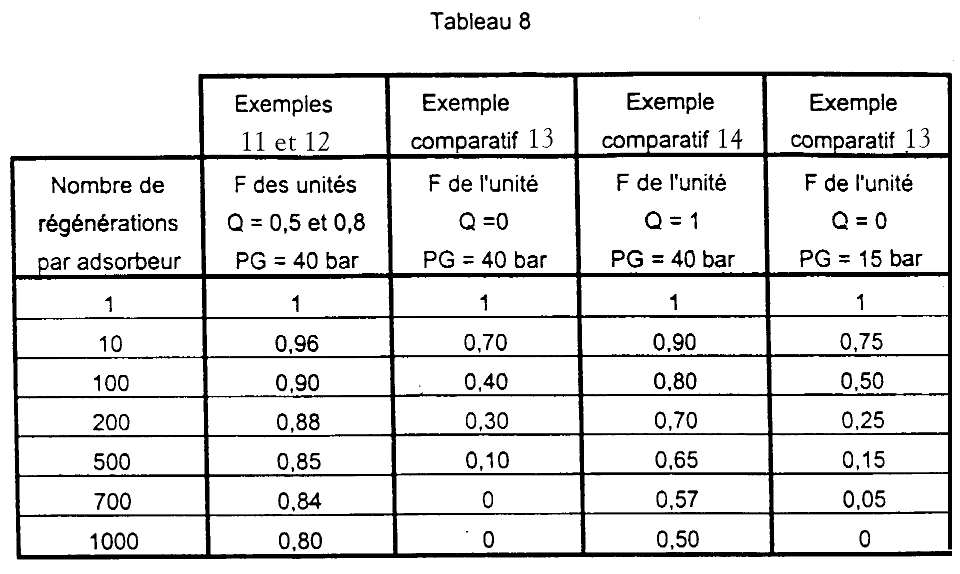

Les concentrations en eau des gaz en sortie des adsorbeurs de Q = 0,5 et 0,8 et de celles des adsorbeurs de Q = 0 et 1 sont équivalentes et inférieures à 0,1 ppm en volume.

### EXEMPLES 15 A 17

Le gaz traité est un gaz riche en hydrogène dont la composition en moles est la suivante :

| | |
|---|---|
| H₂ | 80 |
| Méthane | 10 |
| Ethane | 6 |
| Hydrocarbures dont le nombre de C est supérieur à 3 | 4 |

Ce gaz comprend également de l'eau, de l'HCl et de l'H₂S dans les proportions suivantes:

| | |
|---|---|
| eau | 1000 ppm en volume |
| HCl | 20 ppm en volume |
| H₂S | 10 ppm en volume |

Dans cet exemple les conditions opératoires d'adsorption sont les suivantes :

| | |
|---|---|
| Pression | 10 bars |
| Température | 25°C |
| Temps d'adsorption | 12 h |
| Débit | 50 [Nm³/h] m³/h |
| Sens du flux | de bas en haut |

et les conditions opératoires de régénération sont les suivantes :

| | |
|---|---|
| Type de gaz | gaz sec riche en hydrogène |
| Pression de régénération | 9,5 bars |
| Sens du flux | de haut en bas |
| Température | 260°C |
| Temps de chauffage | 6 h |
| Temps de refroidissement | 5,5 h |
| Débit en gaz | 5 m³/h [Nm³/h] |

L'unité est constituée de deux adsorbeurs fonctionnant en parallèle dont un adsorbe lorsque le second désorbe.

Les adsorbeurs sont des colonnes de diamètre interne 1400 mm.

On met en parallèle le facteur de vieillissement d'une unité fonctionnant selon le procédé de l'invention avec un rapport du volume d'alumine sur le volume d'alumine et du tamis moléculaire dans la zone d'équilibre d'adsorption de l'eau de 0,2 avec les facteurs de vieillissement d'unités constituées uniquement de tamis moléculaire donc de rapport Q = 0 ou uniquement d'alumine donc de rapport Q = 1.

Plus précisément, les unités présentent les compositions suivantes :

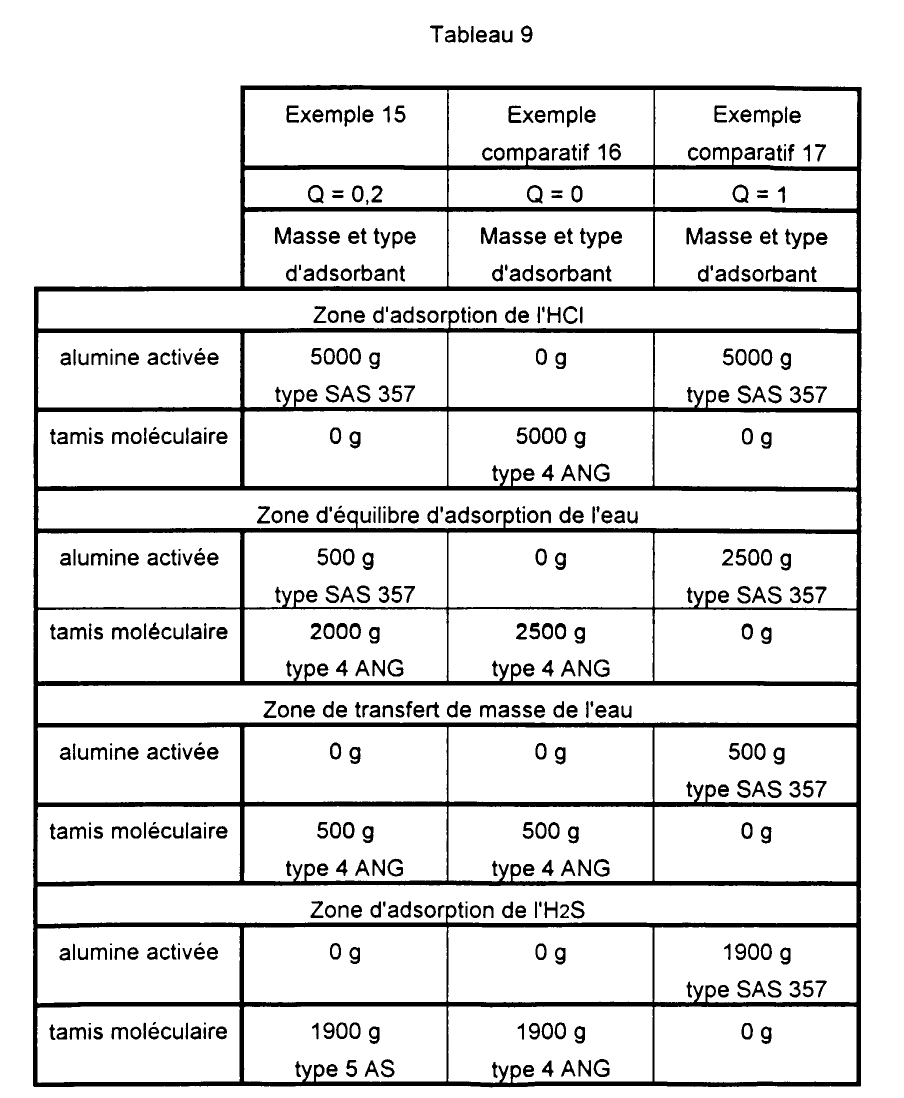

L'alumine SAS 357 commercialisée par Procatalyse est composée de billes d'alumine dopée sodium de diamètre compris entre 2 et 5 mm.

Le tamis moléculaire 4ANG commercialisé par Procatalyse est une zéolite 4A se présentant sous la forme d'extrudés de diamètre 1,6 mm.

Le tamis moléculaire SAS commercialisé par Procatalyse est une zéolite 5A se présentant sous la forme d'extrudés de diamètre 1,6 mm.

En fonction du nombre de régénérations des adsorbeurs, on mesure les facteurs de vieillissement (F) des unités.

**Tableau 10**

| Nombre de régénérations par adsorbeur | Facteur de vieillissement unité Q = 0,2 | Facteur de vieillissement unité Q = 0 | Facteur de vieillissement unité Q = 1 |
|---|---|---|---|
| 1 | 1 | 1 | 1 |
| 10 | 0,97 | 0,90 | 0,93 |
| 100 | 0,91 | 0,70 | 0,85 |
| 200 | 0,88 | 0,60 | 0,7 |
| 500 | 0,8 | 0,40 | 0,6 |
| 700 | 0,75 | 0,20 | 0,5 |
| 1000 | 0,67 | 0 | 0,3 |

En sortie de l'adsorbeur dont le Q est de 0,2, la teneur du gaz en eau est de 0,2 ppm en volume, en HCI de 0,1 ppm en volume et en H₂S de 0,1 ppm en volume.

## Revendications

1. Procédé de séchage d'un mélange gazeux ou liquide par passage dudit mélange dans un adsorbeur, caractérisé en ce que la zone d'équilibre d'adsorption de l'eau de l'adsorbeur comporte une zone amont d'alumine et une zone aval de tamis moléculaire.

2. Procédé selon la revendication 1, caractérisé en ce que, dans la zone d'équilibre d'adsorption de l'eau de l'adsorbeur, le rapport du volume de l'alumine sur celui de l'alumine et du tamis moléculaire est au plus de 0,95.

3. Procédé selon l'une des revendications précédentes, caractérisé en ce que, dans la zone d'équilibre d'adsorption de l'eau de l'adsorbeur, le rapport du volume de l'alumine sur celui de l'alumine et du tamis moléculaire est compris entre 0,05 et 0,95.

4. Procédé selon l'une des revendications précédentes, caractérisé en ce que, le mélange gazeux ou liquide est sursaturé ou saturé en eau et le rapport du volume de l'alumine sur celui de l'alumine et du tamis moléculaire, dans la zone d'équilibre, est compris entre 0,5 et 0,8.

5. Procédé selon l'une quelconque des revendications 1 à 3, caractérisé en ce que, le mélange gazeux ou liquide est sous-saturé ou saturé en eau et le rapport du volume de l'alumine sur celui de l'alumine et du tamis moléculaire, dans la zone d'équilibre, est compris entre 0,05 et 0,30.

6. Procédé selon l'une des revendications précédentes, caractérisé en ce que l'alumine utilisée est issue de la déshydratation rapide d'hydroxydes ou d'oxyhydroxydes d'aluminium.

7. Procédé selon l'une des revendications précédentes, caractérisé en ce que les tamis moléculaires utilisés comprennent au moins une zéolite choisie parmi le groupe comprenant les zéolites A et X.

8. Procédé selon l'une des revendications précédentes, caractérisé en ce que la vitesse superficielle du mélange gazeux dans l'adsorbeur est comprise entre 1 et 20 m/minutes et celle du mélange liquide entre 0,1 et 2 m/minutes.

9. Procédé selon l'une des revendications précédentes, caractérisé en ce que la température au sein de l'adsorbeur est comprise entre 0 et 90°C.

10. Procédé de séchage selon l'une des revendications précédentes d'un mélange liquide ou gazeux comprenant en outre de l'HCl caractérisé en ce que la zone d'adsorption de l'eau de l'adsorbeur est précédée, dans le sens de passage du mélange dans l'adsorbeur, d'une zone à base d'alumine permettant d'éliminer l'HCl contenu dans le mélange.

11. Procédé de séchage selon l'une des revendications 1 à 10 d'un mélange liquide ou gazeux comprenant en outre de l'H₂S caractérisé en ce que la zone d'adsorption de l'eau de l'adsorbeur est suivie, dans le sens de passage du mélange dans l'adsorbeur, d'une zone à base de tamis moléculaire permettant d'éliminer l'H₂S contenu dans le mélange.

12. Procédé de séchage selon l'une des revendications 1 à 10 d'un mélange liquide ou gazeux comprenant en outre de l'H₂S et de l'HCl caractérisé en ce que la zone d'adsorption de l'eau de l'adsorbeur est précédée, dans le sens de passage du mélange dans l'adsorbeur, d'une zone à base d'alumine permettant d'éliminer l'HCl contenu dans le mélange, et suivie d'une zone à base de tamis moléculaire permettant d'éliminer l'H₂S contenu dans le mélange.

## Patentansprüche

1. Verfahren zum Trocknen eines gasförmigen oder flüssigen Gemisches mittels Passieren dieses Gemisches durch einen Adsorber, dadurch gekennzeichnet, daß die Adsorptionsgleichgewichtszone des Wassers des Adsorbers eine Aluminiumoxidanströmzone und eine Molekularsiebabströmzone aufweist.

2. Verfahren nach Anspruch 1, dadurch gekennzeichnet, daß in der Adsorptionsgleichgewichtszone des Wassers des Adsorbers das Volumenverhältnis von dem Aluminiumoxid zu dem Auluminiumoxid und dem Molekularsieb höchstens 0,95 ist.

3. Verfahren nach einem der vorhergehenden Ansprüche, dadurch gekennzeichnet, daß in der Adsorptionsgleichgewichtszone des Wassers des Adsorbers das Volumenverhältnis von dem Aluminiumoxid zu dem Auluminiumoxid und dem Molekularsieb zwischen 0,05 und 0,95 ist.

4. Verfahren nach einem der vorhergehenden Ansprüche, dadurch gekennzeichnet, daß das gasförmige oder flüssige Gemisch an Wasser übersättigt oder gesättigt ist und in der Adsorptionsgleichgewichtszone das Volumenverhältnis von dem Aluminiumoxid zu dem Auluminiumoxid und dem Molekularsieb zwischen 0,5 und 0,8 beträgt.

5. Verfahren nach einem der Ansprüche 1 bis 3, dadurch gekennzeichnet, daß das gasförmige oder flüssige Gemisch an Wasser untersättigt oder gesättigt ist und in der Adsorptionsgleichgewichtszone das Volumenverhältnis von dem Aluminiumoxid zu dem Auluminiumoxid und dem Molekularsieb zwischen 0,05 und 0,30 beträgt.

6. Verfahren nach einem der vorhergehenden Ansprüche, dadurch gekennzeichnet, daß das verwendete Aluminiumoxid aus der schnellen Dehydratation von Hydroxiden oder Oxidohydroxiden von Aluminium stammt.

7. Verfahren nach einem der vorhergehenden Ansprüche, dadurch gekennzeichnet, daß die verwendeten Molekularsiebe mindestens einen Zeoliten gewählt aus der Gruppe der Zeoliten A und X umfasst.

8. Verfahren nach einem der vorhergehenden Ansprüche, dadurch gekennzeichnet, daß die Oberflächengeschwindigkeit des gasförmigen Gemisches im Adsorber zwischen 1 und 20 m/Minute und die des flüssigen Gemisches zwischen 0,1 und 2 m/Minute beträgt.

9. Verfahren nach einem der vorhergehenden Ansprüche, dadurch gekennzeichnet, daß die Temperatur mitten im Adsorber zwischen 0 und 90°C beträgt.

10. Verfahren nach einem der vorhergehenden Ansprüche zum Trocknen eines flüssigen oder gasförmigen Gemisches, das im übrigen HCl umfasst, dadurch gekennzeichnet, daß der Adsorptionszone des Wasseradsorbers in Richtung des Passierens des Gemisches im Adsorber, eine Zone auf Aluminiumoxidbasis vorhergeht, die es ermöglicht, das im Gemisch enthaltene HCl zu eliminieren.

11. Verfahren nach einem der Ansprüche 1 bis 10 zum Trocknen eines flüssigen oder gasförmigen Gemisches, das im übrigen H₂S umfasst, dadurch gekennzeichnet, daß der Adsorptionszone des Wasseradsorbers in Richtung des Passierens des Gemisches im Adsorber, eine Zone auf Basis eines Molekularsiebes folgt, die es ermöglicht, das im Gemisch enthaltene H₂S zu eliminieren.

12. Verfahren nach einem der Ansprüche 1 bis 10 zum Trocknen eines flüssigen oder gasförmigen Gemisches, das im übrigen H₂S und HCl umfasst, dadurch gekennzeichnet, daß der Adsorptionszone des Wasseradsorbers in Richtung des Passierens des Gemisches im Adsorber, eine Zone auf Aluminiumoxidbasis vorhergeht, die es ermöglicht, das im Gemisch enthaltene HCl zu eliminieren, und eine Zone auf Basis eines Molekularsiebes folgt, die es ermöglicht, das im Gemisch enthaltene H₂S zu eliminieren.

## Claims

1. Process for drying a gaseous or liquid mixture by passing the said mixture into an adsorber, characterized in that the water adsorption equilibrium zone of the adsorber comprises an upstream alumina zone and a downstream molecular sieve zone.

2. Process according to claim 1, characterized in that, in the water adsorption equilibrium zone of the adsorber, the ratio of the volume of alumina to that of alumina and of the molecular sieve is not more than 0.95.

3. Process according to one of the preceding claims, characterized in that, in the water adsorption equilibrium zone of the adsorber, the ratio of the volume of alumina to that of alumina and of the molecular sieve is between 0.05 and 0.95.

4. Process according to one of the preceding claims, characterized in that the gaseous or liquid mixture is supersaturated or saturated with water and the ratio of the volume of alumina to that of alumina and of the molecular sieve, in the equilibrium zone, is between 0.5 and 0.8.

5. Process according to any one of Claims 1 to 3, characterized in that the gaseous or liquid mixture is undersaturated or saturated with water and the ratio of the volume of alumina to that of alumina and of the molecular sieve, in the equilibrium zone, is between 0.05 and 0.30.

6. Process according to one of the preceding claims, characterized in that the alumina employed is a product of the rapid dehydration of aluminium hydroxides or oxyhydroxides.

7. Process according to one of the preceding claims, characterized in that the molecular sieves employed include at least one zeolite chosen from the group including zeolites A and X.

8. Process according to one of the preceding claims, characterized in that the surface velocity of the gaseous mixture in the adsorber is between 1 and 20 m/minute and that of the liquid mixture between 0.1 and 2 m/minute.

9. Process according to one of the preceding claims, characterized in that the temperature within the adsorber is between 0 and 90°C.

10. Process for drying according to one of the preceding claims a liquid or gaseous mixture additionally including HCl, characterized in that the water adsorption zone of the adsorber is preceded, in the direction of flow of the mixture in the adsorber, by an alumina-based zone making it possible to remove the HCl present in the mixture.

11. Process for drying according to one of claims 1 to 10 a liquid or gaseous mixture additionally including H₂S, characterized in that the water adsorption zone of the adsorber is followed, in the direction of flow of the mixture in the adsorber, by a molecular sieve-based zone making it possible to remove the H₂S present in the mixture.

12. Process for drying according to one of Claims 1 to 10 a liquid or gaseous mixture additionally including H₂S and HCl, characterized in that the water adsorption zone of the adsorber is preceded, in the direction of flow of the mixture in the adsorber, by an alumina-based zone making it possible to remove the HCl present in the mixture, and followed by a molecular-sieve-based zone making it possible to remove the H₂S present in the mixture.
